# EUROPÄISCHE PATENTANMELDUNG

(11) **EP 0 556 577 A1**
(43) Veröffentlichungstag der Anmeldung: **25.08.1993**
(21) Anmeldenummer: 93100813.0
(22) Anmeldetag: 20.01.1993
(51) Int. Cl.: C08L 97/02, B27N 3/00

(54) **Zellulosehaltiges Pressteil und Verfahren zu seiner Herstellung**

(30) Priorität: 20.01.1992 DE 9200610 U; 29.06.1992 DE 9208683 U
(71) Anmelder: Krickl, Ludwig, D-84478 Waldkraiburg (DE); VÖWA WERTSTOFFTECHNIK GmbH, D-86399 Bobingen (DE)
(72) Erfinder: Krickl, Ludwig, W-8264 Waldkraiburg (DE); Vöst, Walter, W-8903 Bobingen (DE)

(57) **Zusammenfassung**

Ein zellulosehaltiges Preßteil (10, 18) besteht aus durch ein aushärtbares Bindemittel (16, 22) aus Naturprodukten verbundenen Pflanzenteilen (12, 20) und gegebenenfalls einer Beimischung aus tierischer Wolle (14).

## Beschreibung

Die Erfindung betrifft ein zellulosehaltiges Preßteil bestehend aus durch ein aushärtbares Bindemittel verbundenen Pflanzenteilen.

Solche Preßteile sind als Spanplatten bekannt, bei denen Holzspäne mit synthetischen Klebern verbunden sind. Spanplatten werden vorwiegend in der Bau- und Möbelindustrie, aber z.B. auch als vielseitig einzusetzender Werkstoff für Heimwerker verwendet.

Durch die Verwendung synthetischer Stoffe bei der Herstellung von Spanplatten verursachen sie gewisse Umweltprobleme, z.B. durch Abgabe von gasförmigen Bestandteilen bei Gebrauch und Entsorgung.

Der Erfindung liegt die Aufgabe zugrunde, auf einfache, kostengünstige Weise umweltfreundliche Preßteile zu schaffen, die bei Herstellung, Gebrauch und Entsorgung keine besonderen Probleme bieten und die außerdem besonders kostengünstig bisher zumindest teilweise ungenutzt bleibende Abfallstoffe einer sinnvollen Nutzung zuführen können. Dabei soll angestrebt werden, den ökologischen Nutzen der Preßteile je nach Anwendungsbereich noch dadurch zu verbessern, daß die Preßteile mit einer relativ hohen wärmedämmende Wirkung ausgestattet werden können, so daß gegebenenfalls mit Hilfe der erfindungsgemäßen Preßteile Heiz- und/oder Kühlenergie eingespart werden kann. Schließlich soll das Fertigungsverfahren möglichst einfach und effektiv gestaltet werden.

Die Lösung besteht darin, daß das Bindemittel aus Naturprodukten besteht. Dabei kann es sich um pflanzliche Öle, wie etwa Leinöl, Rizinusöl oder Holzöl handeln, um Baumharze, wie Kolophonium, um Milchsäure-Kasein, um Kalk, Wasserglas, Natur-Kautschuk in Form von Gummimilch, um tierische Leime, wie z.B. Haut- und Knochenleime, oder um Schellack. Diese Bindemitel können in reiner oder kombinierter Form und auch gemischt mit anderen natürlichen Bindemitteln benutzt werden.

Vorteilhaft ist es, das Bindemittel in Form eines Trockenklebers zuzugeben, weil dadurch einerseits der Aufwand zur Verdampfung von Feuchtigkeit während des Fertigungsvorgang und andererseits die Gefahr von Verformungen des fertigen Preßkörpers durch Feuchtigkeitsauswirkungen, auch während der Kühlphase, reduziert wird.

Besonders vorteilhaft ist es, wenn die Pflanzenteile Stroh, Flachsstengel, oder Getreidekleie (Schalen, wie etwa Reisschalen) sind, weil diese Naturprodukte bisher nur teilweise sinnvoll genutzt werden und in großen Mengen durch Verbrennen beseitigt werden. Die Verwendung von Stroh erweist sich als besonders vorteilhaft, weil sich eine wasserabstoßende Wirkung ergibt, die Formstabilität auch in einer relativ feuchten Umgebung gewährleistet.

Damit die Preßkörper auch als wärmedämmende Elemente eingesetzt werden können, wird den Pflanzenteilen tierische Wolle beigemischt.

Eine besonders gute Wärmedämmung wird erreicht, wenn die tierische Wolle Schafwolle ist.

Um einen ausreichend formbeständigen Preßkörper mit guter Wärmedämmwirkung zu erhalten, sollte nach einer vorteilhaften Ausgestaltung der Erfindung in dem Gemisch aus Pflanzenteilen und Wolle der Anteil der Wolle zwischen 40 und 60 Gewichssprozenten liegen, wobei vorzugsweise Pflanzenteile und Wolle zu etwa gleichen Gewichtsteilen verwendet werden.

Zur Verbesserung der Formbeständigkeit enthält das Gemisch zumindest annähernd starre Pflanzenteile. Unter zumindest annähernd starren Pflanzenteilen werden solche Teile verstanden, deren Bieg- oder Schmiegsamkeit so gering ist, daß aufgrund der unregelmäßigen Anordnung der Teile im Preßkörper der Preßkörper eine ausreichende Formstabilität erhält.

Nach einer zweckmäßigen Ausführungsform liegt der Anteil des Bindemittels zwischen 6 und 10 Gewichtsprozenten.

Eine besonders zweckmäßige Ausführungsform besteht darin, daß das Preßteil Plattenform aufweist.

Es können aber auch anwendungsbezogene Ausformungen des Preßkörpers vorteilhaft sein, wie z.B. die Gestaltung als Pflanztopf. Da der Preßkörper nur aus natürlichen Stoffen besteht, die im Boden verrotten, kann die Pflanze mit dem Pflanztopf eingepflanzt werden, der sich ohne Umweltschaden mit der Zeit auflöst.

Bei der Herstellung von Preßkörpern in Plattenform besteht eine bevorzugte Verfahrensweise darin, daß daß eine für die Fertigung einer Platte erforderliche Menge einer Mischung aus Pflanzenteilen und Bindemittel, sowie gegebenenfalls Wolle, in einer Vorpreßstation in einen Vorpreßrahmen eingefüllt wird, der auf einen über eine Stützfläche geführten, taktweise bewegbaren Endlosförderer aufgesetzt ist, daß die Mischung im Vorpreßrahmen egalisiert und durch einen absenkbaren Preßstempel kurzzeitig vorgepreßt wird und daß der Preßstempel und der Vorpreßrahmen angehoben und der auf dem Endlosförderer gebildete Vorpreßling durch einen Taktschritt des Endlosförderers in eine beheizbare Preßstation überführt wird, in der ein beheizbarer Preßstempel auf den Vorpreßling während einer materialbedingten Verweildauer zum Abbinden des Bindemittels abgesenkt wird.

Da die Verweilzeit des Materials im Bereich der beheizten Presse etwa 3 bis 5 Minuten beträgt, ist bei dem bisher bei der Herstellung von Preßplatten üblichen Verfahren die Verwendung mehrerer Rahmen erforderlich, um während des Heißpressens einen weiteren Rahmen mit Material füllen zu Können. Außerdem ist der apperative Aufwand entsprechend groß, weil die die Heißpreßstation verlassenden Preßkörper aus den Rahmen gelöst und die Rahmen wieder zur Beschickungsstation zurückgeführt werden müssen. Durch das Vorpressen wird ein Vorpreßling erhalten, der ohne den Rahmen in die Heißpreßstation überführt werden kann. Es wird also nur ein einziger Rahmen benötigt, der in der Vorpreß- bzw. Beschickungsstation verbleibt und sofort wieder für eine erneute Beschickung auf den Endlosförderer abgesenkt werden kann, wenn der Vorpreßling in die Heißpreßstation überführt worden ist.

Eine weitere vorteilhafte Ausgestaltung besteht darin, daß der Preßkörper nach dem Abheben des beheizten Preßstempels durch einen weiteren Taktschritt des Endlosförderers in eine mit einem Kühlmittel versorgbare Kühlstation überführt wird, in der ein vom Kühlmittel beaufschlagbarer Kühlstempel auf den Preßkörper abgesenkt und nach Abkühlung des Preßkörpers wieder angehoben wird, worauf der Preßkörper vom Endlosförderer abgenommen wird. Dadurch entfällt die bisher übliche, relativ lange. einen hohen Raumaufwand erfordernde Kühlstrecke im Anschluß an die Heißpreßstation. Außerdem wird durch den Druck des Kühlstempels während des relativ kurzen Kühlvorgangs eine qualitativ hochwertige Oberfläche des Preßkörpers erreicht.

Anhand der nun folgenden Beschreibung der in der Zeichnung dargestellten Ausführungsbeispiele der Erfindung wird diese näher erläutert.

Es zeigt:
- Fig. 1: einen plattenförmigen Preßkörper in perspektivischer, geschnittener Ansicht,
- Fig. 2: einen Schnitt durch einen Preßkörper in Form eines Pflanztopfs und
- Fig. 3: eine schematische Darstellung einer Anlage zur Herstellung erfindungsgemäßer Preßplatten.

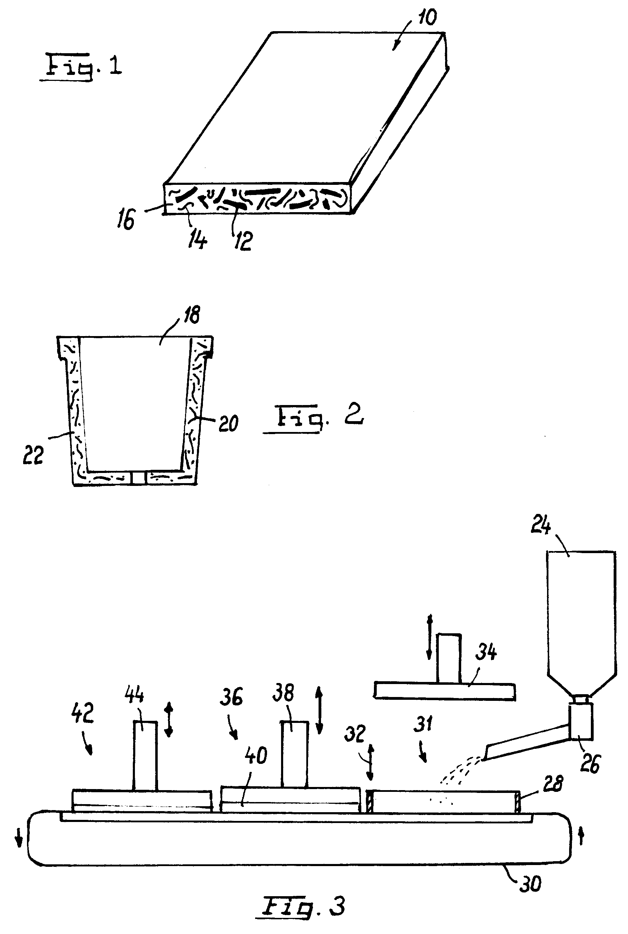

In Fig. 1 bezeichnet 10 den plattenförmigen Preßkörper insgesamt, in dem Flachsstengel 12 und Schafwolle 14 zu etwa gleichen Gewichtsteilen enthalten und durch ein Naturharz 16 gebunden sind.

Der in Fig. 2 gezeigte rotationssymmetrische Preßkörper 18 in Form eines Pflanztopfes enthält Strohteile 20, die durch ein Bindemittel 22 bestehend aus Milchsäure-Kasein, Naturkautschuk und Borax gebunden sind.

Die in Fig. 3 gezeigte Anlage zeigt einen Behälter 24 für das zu verpressende Gemisch aus Pflanzenteilen und Bindemittel, gegebenenfalls mit Zugabe von tierischer Wolle, aus dem über eine Dosiervorrichtung 26 das Gemisch in der für eine Preßplatte erforderlichen Menge in den von einem Vorpreßrahmen 28 auf einem horizontalen Endlosförderer 30 in einer Vorpreßstation 31 abgegrenzeten Bereich abgegeben werden kann. Der Vorpreßrahmen 28 ist heb- und senkbar angeordnet, was schematisch durch die Pfeile 32 angezeigt wird.

Nachdem der auf den Endlosförderer 30 abgesenkte Vorpreßrahmen mit dem Gemisch aus der Dosiervorrichtung 26 beschickt worden ist, wird das Gemisch von Hand oder mittels einer geeigneten Vorrichtung mit etwa gleichmäßiger Materialhöhe im Vorpreßrahmen verteilt bzw. egalisiert. Anschließend wird ein vertikal beweglicher Vorpreßstempel 34 in den Rahmen 28 abgesenkt, der das Preßmaterial verdichtet, daß dadurch soweit formbeständig wird, daß es nach dem Abheben des Vorpreßstempels und des Vorpreßrahmens in Plattenform durch eine Taktbewegung des Endlosförderers in eine Heißpreßstation 36 befördert werden kann.

In der Heißpreßstation 36 wird ein beheizbarer Preßstempel 38 auf den Vorpreßling 40 abgesenkt, der abhängig von Material und Materialstärke für etwa 3 bis 5 Minuten einer Temperatur von etwa 180 °C und einem Druck von etwa 15 bar ausgesetzt wird, wodurch das Bindemittel abbindet. Anschließend wird der Preßstempel 38 angehoben und der Preßkörper durch den Endlosförderer 30 aus der Heißpreßstation 36 in eine Kühlstation 42 überführt in der ein von einem Kühlmittel, vorzugsweise Wasser, gekühlter Kühlstempel 44 auf die noch heiße Preßplatte gedrückt und dadurch die Preßplatte rasch abgekühlt und zugleich vor Formveränderungen während der Kühhlphase geschützt wird. Anschließend wird die Preßplatte vom Endlosförderer abgenommen.

Während der Heißpreßphase wurde der Vorpreßrahmen 28 wieder auf den Endlosförderer 30 abgesenkt und mit Gemisch beschickt und ein Vorpreßling erzeugt, so daß während des Transports der Preßplatte aus der Heißpreßstation 36 in die Kühlstation 42 die Heißpreßstation zugleich mit einem Vorpreßling beschickt wird, der heißgepreßt wird, während der aus der Heißpreßstation entnommene Preßkörper gekühlt wird.

## Patentansprüche

**1.** Zellulosehaltiges Preßteil (10, 18) bestehend aus durch ein aushärtbares Bindemittel (16, 22) verbundenen Pflanzenteilen (12, 20), *dadurch gekennzeichnet*, daß das Bindemittel (16, 22) 2aus Naturprodukten besteht.

**2.** Preßteil nach Anspruch 1, *dadurch gekennzeichnet*, daß die Pflanzenteile Stroh sind.

**3.** Preßteil nach Anspruch 1, *dadurch gekennzeichnet*, daß die Pflanzenteile Getreidekleie sind.

**4.** Preßteil nach Anspruch 1, *dadurch gekennzeichnet*, daß die Pflanzenteile Reisschalen sind.

**5.** Preßteil nach Anspruch 1, *dadurch gekennzeichnet*, daß die Pflanzenteile Flachsstengel sind.

**6.** Preßteil nach einem der vorhergehenden Ansprüche, *dadurch gekennzeichnet*, daß das Bindemittel pflanzliche Öle umfaßt.

**7.** Preßteil nach einem der Ansprüche 1 - 5, *dadurch gekennzeichnet*, daß das Bindemittel Baumharze umfaßt.

**8.** Preßteil nach einem der Ansprüche 1 - 5, *dadurch gekennzeichnet*, daß das Bindemittel Milchsäure-Kasein umfaßt.

**9.** Preßteil nach einem der Ansprüche 1 - 5, *dadurch gekennzeichnet*, daß das Bindemittel Kalk umfaßt.

**8.** Preßteil nach einem der Ansprüche 1 - 5, *dadurch gekennzeichnet*, daß das Bindemittel Wasserglas umfaßt.

**9.** Preßteil nach einem der Ansprüche 1 - 5, *dadurch gekennzeichnet*, daß das Bindemittel Natur-Kautschuk umfaßt.

**10**. Preßteil nach einem der Ansprüche 1 - 5, *dadurch gekennzeichnet*, daß das Bindemittel tierische Leime umfaßt.

**11.** Preßteil nach einem der Ansprüche 1 - 5, *dadurch gekennzeichnet*, daß das Bindemittel Schellack umfaßt.

**12.** Preßteil nach einem der Ansprüche 1 - 11, *dadurch gekennzeichnet*, daß den Pflanzenteilen tierische Wolle (14) beigemischt ist.

**13.** Preßteil nach Anspruch 12, *dadurch gekennzeichnet*, daß d e tierische Wolle (14) Schafwolle ist.

**14.** Preßteil nach einem der Ansprüche 12 oder 13, *dadurch gekennzeichnet*, daß in dem Gemisch aus Pflanzenteilen (12) und Wolle (14) der Anteil der Wolle zwischen 40 und 60 Gewichtsprozenten liegt.

**15.** Preßkörper nach Anspruch 14, *dadurch gekennzeichnet*, daß er Pflanzenteile (12) und Wolle (14) zu etwa gleichen Gewichtsteilen enthält.

**16.** Preßkörper nach einem der Ansprüche 12 - 15, *dadurch gekennzeichnet*, daß das Gemisch zumindest annähernd starre Pflanzenteile enthält.

**17.** Preßkörper nach einem der vorhergehenden Ansprüche, *dadurch gekennzeichnet*, daß der Anteil des Bindemittels (16, 22) bei 6 bis 10 Gewichtsprozenten liegt.

**18.** Preßteil (10) nach einem der vorhergehenden Ansprüche, *dadurch gekennzeichnet*, daß es Plattenform aufweist.

**19.** Preßteil nach einem der Ansprüche 1- 11, *dadurch gekennzeichnet*, daß es als Pflanztopf (18) gestaltet ist.

**20.** Verfahren zur Herstellung eines Preßkörpers nach Anspruch 18, *dadurch gekennzeichnet*, daß eine für die Fertigung einer Platte erforderliche Menge einer Mischung aus Pflanzenteilen und Bindemittel, sowie gegebenenfalls Wolle, in einer Vorpreßstation in einen Vorpreßrahmen eingefüllt wird, der auf einen über eine Stützfläche geführten, taktweise bewegbaren Endlosförderer aufgesetzt ist, daß die Mischung im Vorpreßrahmen egalisiert und durch einen absenkbaren Preßstempel kurzzeitig vorgepreßt wird und daß der Preßstempel und der Vorpreßrahmen angehoben und der auf dem Endlosförderer gebildete Vorpreßling durch einen Taktschritt des Endlosförderers in eine beheizbare Preßstation überführt wird, in der ein beheizbarer Preßstempel auf den Vorpreßling während einer materialbedingten Verweildauer zum Abbinden des Bindemittels abgesenkt wird.

**21.** Verfahren nach Anspruch 20, *dadurch gekennzeichnet*, daß der Preßkörper nach dem Abheben des beheizten Preßstempels durch einen weiteren Taktschritt des Endlosförderers in eine mit einem Kühlmittel versorgbare Kühlstation überführt wird, in der ein vom Kühlmittel beaufschlagbarer Kühlstempel auf den Preßkörper abgesenkt und nach Abkühlung des Preßkörpers wieder angehoben wird, worauf der Preßkörper vom Endlosförderer abgenommen wird.

**22.** Verfahren nach einem der Ansprüche 20 oder 21, *dadurch gekennzeichnet*, daß das Bindemittel in Form eines Trockenklebers beigemischt wird.
